# EUROPEAN PATENT SPECIFICATION

(11) **EP 3 654 604 B1**
(45) Date of publication and mention of the grant of the patent: **30.12.2020**
(21) Application number: 18206765.2
(22) Date of filing: 16.11.2018
(51) Int. Cl.: H04L 29/06

(54) **INTERNET PROTOCOL MULTIMEDIA SUBSYSTEM, IMS CALL SETUP TIME BOOSTER**
INTERNETPROTOKOLL MULTIMEDIA-SUBSYSTEM, IMS-ANRUFAUFBAUZEIT-BOOSTER
SOUS-SYSTÈME MULTIMÉDIA DE PROTOCOLE INTERNET, ACCÉLÉRATEUR DE TEMPS DE RÉGLAGE DES APPELS IMS

(43) Date of publication of application: 20.05.2020
(73) Proprietor: Deutsche Telekom AG, 53113 Bonn (DE)
(72) Inventor: SCHMIDT, Holger, 41844 Wegberg (DE); HOFFMANN, Stefan-Peter, 56659 Burgbrohl (DE); MOHANDAS, Rohith, 53175 Bonn (DE)
(74) Representative: Vossius & Partner Patentanwälte Rechtsanwälte mbB

(56) References cited:
- WO-A1-2011/146205
- US-A1- 2005 141 541
- ELENA GRIGOREVA ET AL: "M2M wake-ups over cellular networks", ALL THINGS CELLULAR, ACM, 2 PENN PLAZA, SUITE 701 NEW YORK NY 10121-0701 USA, 3 October 2016 (2016-10-03), pages 37-42, XP058280183, DOI: 10.1145/2980055.2980059 ISBN: 978-1-4503-4249-0

## Description

The present invention relates to a method and a system for decreasing the Call Setup Time Key Performance Indicator, CST KPI, of an Internet Protocol, IP, multimedia call; and a computer-readable storage medium thereof.

The VoLTE (Voice over Long Term Evolution) Call Setup Time is usually measured by the time difference between sending the INVITE request by the caller and the reception of the 180_Ringing response by the caller. Some deviations to this basic definition do exist but they are just there for taking limitations of the measurement systems into account and for avoiding any manipulations.

Some optimizations of the call setup can be done and are usually done by the operator. The call setup is especially challenging in the mobile network as it involves the radio channel and complex resource reservation and establishment procedures.

The first optimization can be performed with respect to the reservation of the so-called user plane bearer. The user plane bearer is used for transporting the audio channel between the caller and the callee. The speech signal is digitalized and encoded using a certain audio codec, usually an AMR (Adaptive Multi Rate) or EVS (Enhances Voice Service) codec. Originally, IMS was designed in a way which ensures that the media plane bearer is available and established before the callee's device/UE starts ringing. This IMS feature is called "Quality of Service, QoS, Precondition" (making the availability of a QoS enabled media bearer the precondition for ringing the callee). This mechanism is embedded in the SIP call setup messages and requires some additional SIP messages to be transferred between both parties, it thus decreasing the CST. This feature which is tailored-made for the characteristics of mobile networks can be omitted in case the establishment of the user plane bearer can be assumed to be quick enough and when it can be assumed that user plane resources are always available. Another optimization can be done in the way of how the media plane bearer is established within the call setup. Furthermore the network deployment can be optimized for ensuring the minimum path length for the control and user plane messages resulting in minimum transmission delays.
ELENA GRIGOREVA ET AL: "M2M wake-ups over cellular networks", ALL THINGS CELULAR, ACM, 3 October 2016, pages 37-42, XP058280183, DOI: 10.1145/2980055.2980059, ISBN: 978-1-4503-4249-0, is directed to the implementation of OTT SIP as well as SMS over GSM and LTE wake-up methods on a real testbed, connected to a mobile network.

The technical problem to be solved by the present invention is to provide a system and a method for decreasing the CST KPI of a multimedia call, and to overcome the drawbacks of the prior art. The present invention also provides a computer-readable storage medium thereof. This problem is solved with the features of the independent claims. Embodiments of the invention are defined by the dependent claims.

In accordance with an aspect of the present invention, there is provided a method for decreasing a Call Setup Time Key Performance Indicator, CST KPI, of an Internet Protocol, IP, multimedia call in a mobile telecommunications network, the method comprising: initiating the IP multimedia call from an originating user equipment, UE, to a terminating UE; transmitting a session initiation protocol, SIP, call initiation message from the originating UE to a terminating Proxy - Call Session Control Function, P-CSCF, through an originating Serving - Call Session Control Function, S-CSCF; creating a wake-up message via an element upon receiving the SIP call initiation message; wherein the wake-up message bypasses a plurality of network Application Servers, ASs, to start switching a transition of the terminating UE from an idle state to a connected state before the SIP call initiation message reaches the terminating P-CSCF.

The wake-up message may be an SIP OPTIONS request or e.g. an INFO or MESSAGE request.

The network element creating the wake-up request is preferably the originating S-CSCF, or a CST Improvement Application Server, or an SIP back-to-back user agent, B2BUA, or an Interconnection Border Control Function, IBCF.

The IP multimedia call may include a Voice over Long Term Evolution, VoLTE, call and/or a Video over Long Term Evolution, ViLTE, call. The IP multimedia call may further include Voice over 5G, Vo5G).

The idle state may correspond to a Radio Resource Control/EPS Connection Management RRC_IDLE/ECM_IDLE state, and the connected state may correspond to an RRC_CONNECTED/ECM_CONNECTED state of the terminating UE.

The mobile telecommunication network may be an Internet Protocol Multimedia Subsystem, IMS, network.

The wake-up message may include a special media feature tag specifying the wake-up purpose of the request. This can be used for processing the request in the terminating UE on application level and/or for network internal routing purposes.

In accordance with another aspect of the present invention, there is provided a system for establishing an Internet Protocol, IP, multimedia call with decreased Call Setup Time Key Performance Indicator, CST KPI, from an originating user equipment, UE, in a mobile telecommunications network, the system comprising the originating UE being configured: to initiate the IP multimedia call from the originating user equipment, UE, to a terminating UE; to transmit a session initiation protocol, SIP, call initiation message from the originating UE to a terminating Proxy - Call Session Control Function, P-CSCF, through an originating Serving - Call Session Control Function, S-CSCF; to request the creation of a wake-up message via a network element upon receiving the SIP call initiation message; wherein the wake-up message is configured to bypass a plurality of network Application Servers, ASs, to start the switching transition of the terminating UE from an idle state to a connected state before the SIP call initiation message reaches the terminating P-CSCF.

In accordance with a further aspect of the present invention, there is provided a computer-readable storage medium comprising instructions which, when executed by a computer, cause the computer to carry out the steps of any one of the methods mentioned above.

The present invention has the following advantageous technical effects:
- It is cumulative to the above described CST enhancements, i.e. it can be performed in addition to the above described CST optimizations of the prior art.
- It parallelizes the IMS and radio resource control procedures. These procedures are currently performed strictly sequentially.
- The processing time that is required by the different IMS Application Servers, ASs, in the originating and terminating leg can be collected for improving the CST.
- It works when the UE is in the Radio Resource Control/EPS Connection Management RRC Idle/ECM Idle State which is the case when the UE is not transferring any data, i.e. not having any call or the user is not surfing the web. This is the state that the UE is residing in most of the time.

The drawings described herein are intended to provide further understanding of the present invention and to constitute part of the present invention. The illustrative examples of the present invention and the description thereof are used to explain the present invention, and they may/must not be understood as constituting improper limitations for the present invention.

### Brief description of the drawings:

- Figure 1: illustrates general Terminating Call Procedures of the related art.
- Figure 2: illustrates Call Procedures of the present invention.

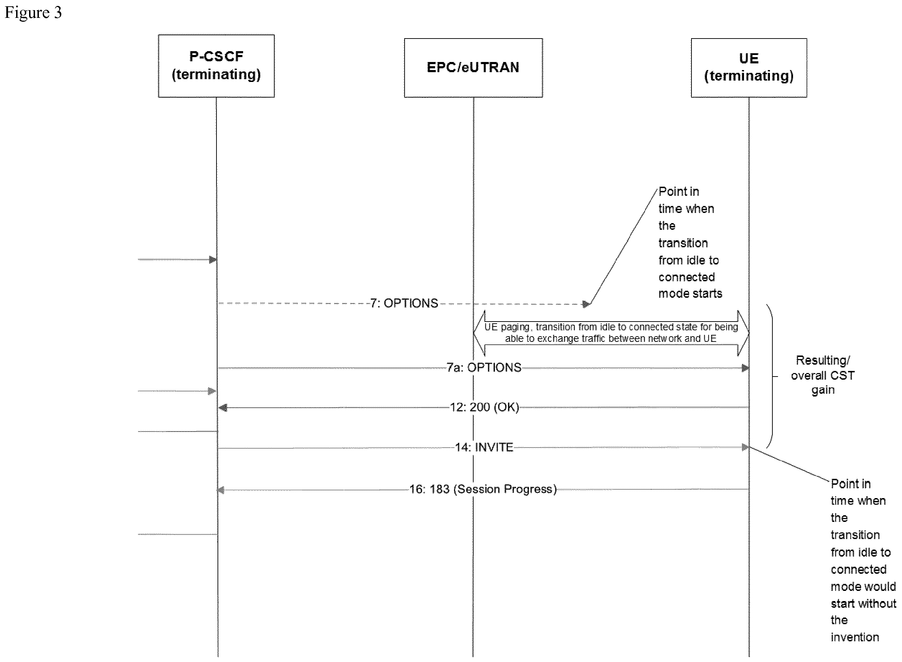

- Figure 3: illustrates a close up view of the Call Procedures of Figure 2 at the Terminating Side.

The present inventive concept of the invention is the parallelization of the transition of the initial SIP call setup request (INVITE request) through the originating _and_ terminating IMS network, and the transition of the UE from the RRC idle/ECM idle to RRC_connected/ECM_connected state/mode. This invention allows parallelization of these two procedures to a large extent as will be detailed further below.

More details and background information for the RRC idle and RRC connected modes are available, for instance at http://know-lte.blogspot.com/2016/06/lte-rrc-states.html

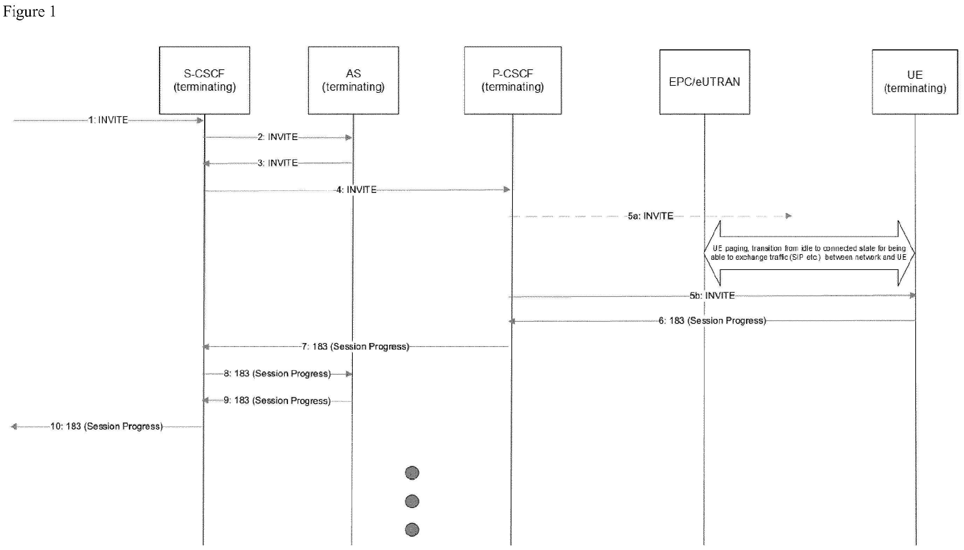

Usually, the first SIP signaling packet that arrives at the terminating Proxy - Call Session Control Function, P-CSCF and that is sent onward by the P-CSCF via the Packet Data Network - Gateway, PDN-GW, to the UE on the Gm interface, starts the procedure for activating the radio channel between the network and the UE. If no data (IMS or internet traffic) is being sent then this channel is suspended for resource usage optimization. That is to say, the procedure on a high level is as illustrated in Figure 1: Terminating Call Procedures.

It can be seen in Figure 1 that the Evolved Packet Core/Evolved-UMTS Terrestrial Access Network, EPC/eUTRAN, procedures and the SIP call setup procedures are performed strictly sequentially. The time needed for performing both is thus cumulative when determining the CST.

As further shown in Figure 1, the INVITE (5a) request that the terminating P-CSCF forwards onward on the Gm interface starts the reestablishment of the radio channel. Thus, a problem with the state of the art is that the INVITE (5b) request can only be sent to the UE when the radio channel has been reestablished.

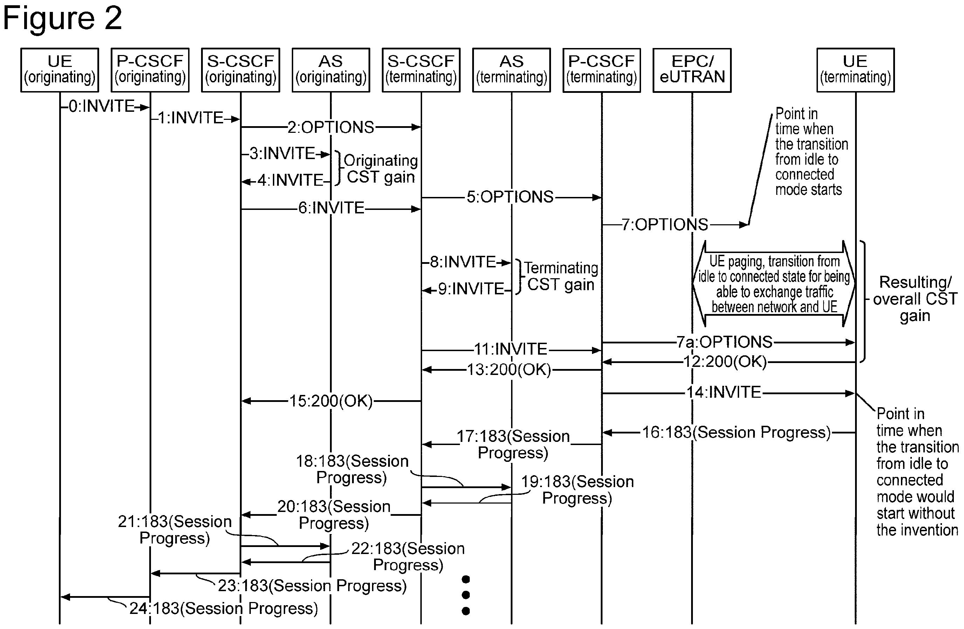

The present invention avoids this by performing both procedures in parallel as this reduces the CST directly. This is achieved by sending an SIP ping request from the IMS network to the terminating UE. This ping is realized preferably by a wake-up message such as an SIP OPTIONS (message 2) request and it is created by a network element, such as the originating Serving - Call Session Control Function, S-CSCF, when receiving the initial INVITE request (message 1) for the Voice over Long Term Evolution, VoLTE, call setup, as can be seen in Figure 2: Invention enriched Call Procedures.

The wake-up message/request may also contain a special media feature tag (see RFC 3840 and RFC 3841) for routing purposes, e.g. like +g.3gpp.wake-up. Such an extension tag in the sense of RFC 3840 would help in avoiding that this request gets routed via IMS Application Server and it would make it possible to indicate the wake-up nature of this request e.g. for avoiding informing the end-user about its reception or even advise the terminating UE for responding in a certain way.

This CST improvement thus results in starting the EPC/eUTRAN procedures already with message (7) before the call setup request, which means that the initial INVITE request is forwarded by the terminating P-CSCF finally via the PDN-GW onward, message (14). The CST reduction equals the time the INVITE request needs for transition through the different IMS Application Servers (ASs), i.e. the time the originating and terminating AS needs for delivering its service (request processing time). Note that there is usually more than one AS in the flow per originating and terminating side. Furthermore, the AS on the originating side usually performs more features/procedures than on the terminating side. This results in that the CST reduction is larger on the originating side than on the terminating side. Roughly, the gain on the originating side should be 3 times higher than on the terminating side.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. A method for decreasing a Call Setup Time Key Performance Indicator, CST KPI, of an Internet Protocol, IP, multimedia call in a mobile telecommunications network, the method comprising:
initiating the IP multimedia call from an originating user equipment, UE, to a terminating UE;
transmitting a session initiation protocol, SIP, call initiation message from the originating UE to a terminating Proxy - Call Session Control Function, P-CSCF, through an originating Serving - Call Session Control Function, S-CSCF;
creating a wake-up message via a network element upon receiving the SIP call initiation message;
wherein the wake-up message bypasses a plurality of network Application Servers, ASs, to start switching a transition of the terminating UE from an idle state to a connected state before the SIP call initiation message reaches the terminating P-CSCF.

2. The method according to claim 1,
wherein the wake-up message is preferably an SIP OPTIONS request or an INFO or MESSAGE request.

3. The method according to claim 1 or 2,
wherein the network element is preferably the originating S-CSCF, or a CST Improvement Application Server, or a SIP back-to-back user agent, B2BUA, or an Interconnection Border Control Function, IBCF.

4. The method according to any one of claims 1 to 3,
wherein the IP multimedia call includes a Voice over Long Term Evolution, VoLTE, call and/or a Video over Long Term Evolution, ViLTE, call.

5. The method according to any one of claims 1 to 4,
wherein the idle state corresponds to a Radio Resource Control/EPS Connection Management RRC_IDLE/ECM_IDLE state, and the connected state corresponds to a RRC_CONNECTED/ECM_CONNECTED state of the terminating UE.

6. The method according to any one of claims 1 to 5,
wherein the mobile telecommunications network is an Internet Protocol Multimedia Subsystem, IMS, network.

7. The method according to any one of claims 1 to 6,
wherein the wake-up message includes a special media feature tag specifying a wake-up purpose of the request.

8. A system for establishing an Internet Protocol, IP, multimedia call with decreased Call Setup Time Key Performance Indicator, CST KPI, from an originating user equipment, UE, in a mobile telecommunications network, the system comprising the originating UE being configured to:
initiate the IP multimedia call from the originating user equipment, UE, to a terminating UE;
transmit a session initiation protocol, SIP, call initiation message from the originating UE to a terminating Proxy - Call Session Control Function, P-CSCF, through an originating Serving - Call Session Control Function, S-CSCF;
request the creation of a wake-up message via a network element upon receiving the SIP call initiation message;
wherein the wake-up message is configured to bypass a plurality of network Application Servers, ASs, to start the switching transition of the terminating UE from an idle state to a connected state before the SIP call initiation message reaches the terminating P-CSCF.

9. The system according to claim 8,
wherein the wake-up message is an SIP OPTIONS request or an INFO or MESSAGE request.

10. The system according to claim 8 or 9,
wherein the network element is preferably the originating S-CSCF, or a CST Improvement Application Server, or a SIP back-to-back user agent, B2BUA, or an Interconnection Border Control Function, IBCF.

11. The system according to any one of claims 8 to 10,
wherein the IP multimedia call includes a Voice over Long Term Evolution, VoLTE, call or a Video over Long Term Evolution, ViLTE, call.

12. The system according to any one of claims 8 to 11,
wherein the idle state corresponds to a Radio Resource Control/EPS Connection Management, RRC_IDLE/ECM_IDLE state and the connected state corresponds to an RRC_CONNECTED/ECM_IDLE state of the terminating UE.

13. The system according to any one of claims 8 to 12,
wherein the mobile telecommunications network is an Internet Protocol Multimedia Subsystem, IMS, network.

14. The system according to any one of claims 8 to 13,
wherein the wake-up message includes a special media feature tag specifying a wake-up purpose of the request.

15. A computer-readable storage medium comprising instructions which, when executed by a computer, cause the computer to carry out the steps of the method of any one of claims 1 to 7.

## Patentansprüche

1. Verfahren zum Verringern eines Anrufaufbauzeit-Schlüsselleistungsindikators, CST KPI, eines Internet-Protokoll, IP, Multimedia-Anrufs in einem Mobiltelekommunikationsnetzwerk, wobei das Verfahren aufweist:
Initiieren des IP-Multimedia-Anrufs von einer Ursprungsbenutzereinrichtung, UE, zu einer Abschluss-UE;
Senden einer Sitzungsinitiierungsprotokoll, SIP, Anrufinitiierungsnachricht von der Ursprungs-UE an eine Abschluss-Proxy-Anrufsitzungs-Steuerfunktion, P-CSCF, durch eine Ursprungs-Dienst-Anrufsitzungs-Steuerfunktion, S-CSCF;
Erzeugen einer Wecknachricht über ein Netzwerkelement beim Empfang der SIP-Anrufinitiierungsnachricht;
wobei die Wecknachricht mehrere Netzwerk-Anwendungsserver, ASs, umgeht, um die Vermittlung eines Übergangs der Abschluss-UE von einem Ruhezustand zu einem Verbindungszustand zu starten, bevor die SIP-Anrufinitiierungsnachricht die Abschluss-P-CSCF erreicht.

2. Verfahren nach Anspruch 1, wobei die Wecknachricht vorzugsweise eine SIP OPTIONS-Anforderung oder eine INFO- oder MESSAGE-Anforderung ist.

3. Verfahren nach Anspruch 1 oder 2,
wobei das Netzwerkelement vorzugsweise die Ursprungs-S-CSCF oder ein CST-Verbesserungs-Anwendungsserver oder ein SIP-Rücken-an-Rücken-Benutzeragent, B2BUA oder eine Zusammenschaltungs-Grenzsteuerfunktion, IBCF, ist.

4. Verfahren nach einem der Ansprüche 1 bis 3,
wobei der IP-Multimedia-Anruf ein Sprache-über-Long Term Evolution, VoLTE, Anruf und/oder ein Video-über-Long Term Evolution, ViLTE, Anruf ist.

5. Verfahren nach einem der Ansprüche 1 bis 4,
wobei der Ruhezustand einem Funkressourcen/EPS-Verbindungsverwaltung RRC_IDLE/ECM_IDLE-Zustand entspricht und der Verbindungszustand einem RRC_CONNECTED/ECM_CONNECTED-Zustand der Abschluss-UE entspricht.

6. Verfahren nach einem der Ansprüche 1 bis 5,
wobei das Mobiltelekommunikationsnetzwerk ein Internet-Protokoll-Multimedia-Subsystem, IMS, Netzwerk ist.

7. Verfahren nach einem der Ansprüche 1 bis 6, wobei die Wecknachricht eine spezielles Medien-Merkmalskennzeichen aufweist, das einen Weckzweck der Anforderung angibt.

8. System zum Herstellen eines Internet-Protokoll, IP, Multimedia-Anrufs mit einem verringerten Anrufaufbauzeit-Schlüsselleistungsindikator, CST KPI, von einer Ursprungsbenutzereinrichtung, UE, in einem Mobiltelekommunikationsnetzwerk, wobei das System die Ursprungs-UE aufweist, die konfiguriert ist:
den IP-Multimedia-Anruf von der Ursprungsbenutzereinrichtung, UE, zu einer Abschluss-UE zu initiieren;
eine Sitzungsinitiierungsprotokoll, SIP, Anrufinitiierungsnachricht von der Ursprungs-UE durch eine Ursprungs-Dienst-Anrufsitzungs-Steuerfunktion, S-CSCF an eine Abschluss-Proxy-Anrufsitzungs-Steuerfunktion, P-CSCF, zu senden;
die Erzeugung einer Wecknachricht über ein Netzwerkelement beim Empfang der SIP-Anrufinitiierungsnachricht anzufordern;
wobei die Wecknachricht konfiguriert ist, mehrere Netzwerk-Anwendungsserver, ASs, zu umgehen, um die Vermittlung eines Übergangs der Abschluss-UE von einem Ruhezustand zu einem Verbindungszustand zu starten, bevor die SIP-Anrufinitiierungsnachricht die Abschluss-P-CSCF erreicht.

9. System nach Anspruch 8, wobei die Wecknachricht eine SIP OPTIONS-Anforderung oder eine INFO- oder MESSAGE-Anforderung ist.

10. System nach Anspruch 8 oder 9,
wobei das Netzwerkelement vorzugsweise die Ursprungs-S-CSCF oder ein CST-Verbesserungs-Anwendungsserver oder ein SIP-Rücken-an-Rücken-Benutzeragent B2BUA oder eine Zusammenschaltungs-Grenzsteuerfunktion, IBCF, ist.

11. System nach einem der Ansprüche 8 bis 10,
wobei der IP-Multimedia-Anruf ein Sprache-über-Long Term Evolution, VoLTE, Anruf oder ein Video-über-Long Term Evolution, ViLTE, Anruf ist.

12. System nach einem der Ansprüche 8 bis 11,
wobei der Ruhezustand einem Funkressourcen/EPS-Verbindungsverwaltung RRC_IDLE/ECM_IDLE-Zustand entspricht und der Verbindungszustand einem RRC_CONNECTED/ECM_CONNECTED-Zustand der Abschluss-UE entspricht.

13. System nach einem der Ansprüche 8 bis 12,
wobei das Mobiltelekommunikationsnetzwerk ein Internet-Protokoll-Multimedia-Subsystem, IMS, Netzwerk ist.

14. System nach einem der Ansprüche 8 bis 13,
wobei die Wecknachricht ein spezielles Medien-Merkmalskennzeichen aufweist, das einen Weckzweck der Anforderung angibt.

15. Computerlesbares Speichermedium, das Befehle aufweist, die, wenn sie von einem Computer ausgeführt werden, den Computer veranlassen, die Schritte des Verfahrens nach einem der Ansprüche 1 bis 7 auszuführen.

## Revendications

1. Procédé de réduction d'un indicateur de performance clé de durée d'établissement d'appel CST KPI d'un appel multimédia de protocole Internet IP dans un réseau de télécommunication mobile, ledit procédé comprenant :
l'initialisation de l'appel multimédia IP d'un équipement d'utilisateur UE d'origine vers un UE terminal ;
la transmission d'un message d'initialisation d'appel de protocole d'ouverture de session SIP de l'UE d'origine vers une fonction de commande de session d'appel d'un mandataire terminal P-CSCF, au moyen d'une fonction de commande de session d'appel de service d'origine S-CSCF ;
la création d'un message de réveil par l'intermédiaire d'un élément de réseau à la réception du message d'initialisation d'appel SIP ;
le message de réveil contournant une pluralité de serveurs d'application de réseau AS pour déclencher la commutation d'une transition de l'UE terminal d'un état de veille à un état de connexion avant que le message d'initialisation d'appel SIP parvienne au P-CSCF terminal.

2. Procédé selon la revendication 1,
où le message de réveil est préférentiellement une demande OPTIONS SIP ou une demande INFO ou MESSAGE.

3. Procédé selon la revendication 1 ou la revendication 2,
où l'élément de réseau est préférentiellement la S-CSCF d'origine, ou un serveur d'application de perfectionnement CST, ou un agent utilisateur dos à dos SIP B2BUA, ou une fonction de commande de bordure d'interconnexion IBCF.

4. Procédé selon l'une des revendications 1 à 3,
où l'appel multimédia IP comprend un appel vocal sur évolution à long terme VoLTE, et/ou un appel vidéo sur évolution à long terme ViLTE.

5. Procédé selon l'une des revendications 1 à 4,
où l'état de veille correspond à un état de commande de ressource radio/gestion de connexion EPS RRC_IDLE/ECM_IDLE, et l'état de connexion correspond à un état RRC_CONNECTED/ECM_CONNECTED de l'UE terminal.

6. Procédé selon l'une des revendications 1 à 5,
où le réseau de télécommunication mobile est un réseau de sous-système multimédia de protocole Internet IMS.

7. Procédé selon l'une des revendications 1 à 6,
où le message de réveil comprend un étiquette de caractéristique multimédia spécifique spécifiant un objectif de réveil de la demande.

8. Système d'établissement d'un appel multimédia de protocole Internet IP à indicateur réduit de performance clé de durée d'établissement d'appel CST KPI d'un équipement d'utilisateur UE d'origine dans un réseau de télécommunication mobile, ledit système comprenant l'UE d'origine étant prévu pour :
initialiser l'appel multimédia IP de l'équipement d'utilisateur UE d'origine vers un UE terminal ;
transmettre un message d'initialisation d'appel de protocole d'ouverture de session SIP de l'UE d'origine vers une fonction de commande de session d'appel d'un mandataire terminal P-CSCF, au moyen d'une fonction de commande de session d'appel de service d'origine S-CSCF ;
demander la création d'un message de réveil par l'intermédiaire d'un élément de réseau à la réception du message d'initialisation d'appel SIP ;
le message de réveil étant prévu pour contourner une pluralité de serveurs d'application de réseau AS pour déclencher la commutation d'une transition de l'UE terminal d'un état de veille à un état de connexion avant que le message d'initialisation d'appel SIP parvienne au P-CSCF terminal.

9. Système selon la revendication 8,
où le message de réveil est une demande OPTIONS SIP ou une demande INFO ou MESSAGE.

10. Système selon la revendication 8 ou la revendication 9,
où l'élément de réseau est préférentiellement la S-CSCF d'origine, ou un serveur d'application de perfectionnement CST, ou un agent utilisateur dos à dos SIP B2BUA, ou une fonction de commande de bordure d'interconnexion IBCF.

11. Système selon l'une des revendications 8 à 10,
où l'appel multimédia IP comprend un appel vocal sur évolution à long terme VoLTE, ou un appel vidéo sur évolution à long terme ViLTE.

12. Système selon l'une des revendications 8 à 11,
où l'état de veille correspond à un état de commande de ressource radio/gestion de connexion EPS RRC_IDLE/ECM_IDLE, et l'état de connexion correspond à un état RRC_CONNECTED/ECM_CONNECTED de l'UE terminal.

13. Système selon l'une des revendications 8 à 12,
où le réseau de télécommunication mobile est un réseau de sous-système multimédia de protocole Internet IMS.

14. Système selon l'une des revendications 8 à 13,
où le message de réveil comprend une étiquette de caractéristique multimédia spécifique spécifiant un objectif de réveil de la demande.

15. Support d'enregistrement lisible par ordinateur, comprenant des instructions dont la lecture par un ordinateur entraîne l'exécution par celui-ci des étapes du procédé selon l'une des revendications 1 à 7.
